(19) Europäisches Patentamt
European Patent Office
Office européen des brevets

(11) **EP 1 348 591 B1**

(12) **EUROPEAN PATENT SPECIFICATION**

(45) Date of publication and mention
of the grant of the patent:
**18.11.2009 Bulletin 2009/47**

(51) Int Cl.:
**F16H 61/28** (2006.01)

(21) Application number: **03251990.2**

(22) Date of filing: **28.03.2003**

(54) **Automated automotive transmission**

Automatisiertes Kraftfahrzeuggetriebe

Boîte de vitesses robotisée pour véhicule automobile

(84) Designated Contracting States:
**DE GB**

(30) Priority: **29.03.2002 JP 2002096966**

(43) Date of publication of application:
**01.10.2003 Bulletin 2003/40**

(73) Proprietor: **HONDA GIKEN KOGYO KABUSHIKI KAISHA**
**Minato-ku, Tokyo (JP)**

(72) Inventors:
• **Ishihara, Sunao,**
**c/o Honda R&D Co.,Ltd.**
**Wako-shi,**
**Saitama (JP)**

• **Kojima, Shinichi,**
**c/o Honda R&D Co.,Ltd.**
**Wako-shi,**
**Saitama (JP)**

(74) Representative: **Piésold, Alexander James**
**Frank B. Dehn & Co.**
**St Bride's House**
**10 Salisbury Square**
**London**
**EC4Y 8JD (GB)**

(56) References cited:
EP-A1- 0 928 725        DE-A1- 19 950 696
JP-A- 2000 074 214      JP-A- 2000 264 178
JP-A- 2001 146 966      US-A- 5 620 386

**Description**

The present invention relates to an automotive transmission for changing the speed of the driving force of a power system in stepped fashion for transmission to driving wheels, and more particularly to an automotive transmission commonly referred to as an automated MT (manual transmission).

In an automotive manual transmission, commonly referred to as MT, an actual change speed operation is constructed to be performed when the driver operates a shift lever to mechanically activate a gear change mechanism. In addition, there is also known an automotive transmission generally referred to as an automated MT (manual transmission) or semi-automatic transmission in which while the driver selects a gear ratio, an actual change speed operation is performed by an electronic control unit via actuators (electric motors or hydraulic cylinders). An automated MT like this designs shift forks for operating the gear change mechanisms (for example, synchromesh mechanisms) such that the shift forks are connected not to the shift lever but to the actuators that are controlled by the electronic control unit, whereby the automated MT can be constructed based upon a conventional MT, that is, by applying thereto many of the constituent components used on the conventional MT.

Thus, while the automated MT can be easily fabricated based upon the conventional MT, since the automated MT has no such parking mechanism as is equipped on an AT (automatic transmission), only engine friction transmitted via the clutch can function as a force (torque) for fixing the driving wheels of a vehicle when it is parked. Thus, since the fixation of the driving wheels is insufficient where the fixation depends only on the engine friction, there have been devised various ways of providing a parking device on the automated MT with as little change in design as possible. For example, JP-A-2001-146966 discloses a construction in which a new gear device is assembled for parking, and JP-A-2000-264178 discloses a construction in which a parking gear is formed on an input shaft of a transmission.

In addition, JP-A-2000-74214 discloses a construction in which an input shaft and an output shaft of a transmission are locked to each other by bringing two different pairs of gear wheels into mesh engagement simultaneously by performing a shift operation with a shift lever for selecting gears being situated at an intermediate position of selection when a vehicle is parked. This construction also provides the advantage that a parking device can be additionally provided on the conventional automated MT without altering largely the design of a transmission case as the parking devices according to the aforesaid two Japanese Unexamined Patent Publications.

EP-A-928725 shows a transmission in which the two pairs of gears that are brought in engagement in the parking range correspond to the reverse gear and a forward gear.

With the parking device according JP-A-2000-74214, however, there were provided the following drawbacks: (1) the selection of two pairs of gear wheels that are used to connect the input shaft with the output shaft is not totally random and is limited to a combination of two pairs of gear wheels that can be selected simultaneously by the shift lever; (2) the connection of the synchromesh mechanism with the gear wheel becomes difficult when the connection is attempted to take place simultaneously for the two pairs of gear wheels, and therefore, there may be caused a case where the parking position cannot be attained with ease; and (3) while the engagement between the synchromesh mechanism and the gear wheel which are in connection with each other needs to be released when the shift lever is operated to shift from the P range to the D range or the like, since the release of the engagement between the synchromesh mechanism and the gear wheel needs to be performed simultaneously for the two pairs of gear wheels, a large magnitude of force is required to operate the shift lever. Among the drawbacks, the first and second drawbacks lead to a problem that the vehicle cannot be brought to a parked condition quickly, and the third drawback to a problem that the shift lever cannot be operated smoothly, thereby resulting in bad maneuverability.

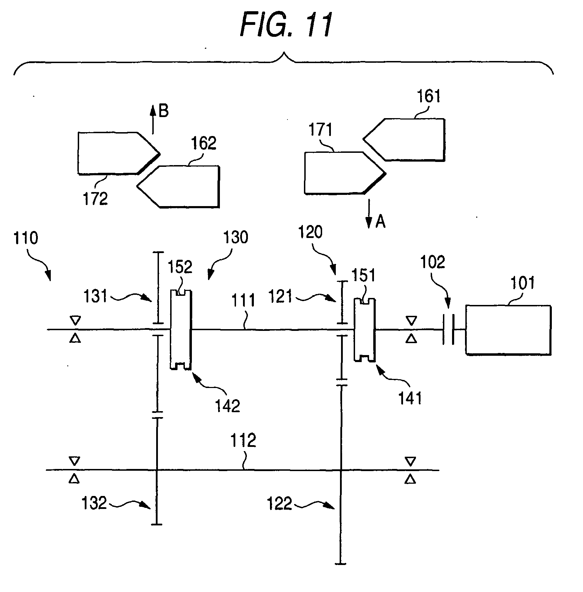

Here, the second drawback will be described below in slight detail with reference to Fig. 11. Fig. 11 is a schematic diagram showing the construction of an automotive transmission 110 to which the power of an engine 101 is transmitted by way of a clutch 102. An output shaft 111 connecting to the clutch 102 and an output shaft 112 connecting to driving wheels, not shown, are disposed in parallel, and power is allowed to be transmitted between the two shafts 111, 112 by way of a first pair of gear wheels 120, which is for low speed, and a second pair of gear wheels 130, which is for high speed. Here, while only the low speed gear wheel pair (the first gear wheel pair) and the high speed gear wheel pair (the second gear wheel pair) are shown, this is just an example, and in reality, there may be involved more gear wheel pairs. The first gear wheel pair 120 comprises an first input gear wheel 121 which idly rotates on the input shaft 111 and a first output gear wheel 122 which is fixed to the output shaft 112, and the second gear wheel pair 130 comprises a second input gear wheel 131 which idly rotates on the input shaft 111 and a second output gear wheel 132 which is fixed to the output shaft 112. The first input gear wheel 121 is connected to the input shaft 111 by way of a first synchromesh mechanism 141 provided on the input shaft 111, and the second input gear wheel 131 is connected to the input shaft 111 by way of a second synchromesh mechanism 142 provided on the input shaft 111. Both the synchromesh mechanisms 141, 142 are designed to connect the input shaft 111 with the input gear wheels 121, 131, respectively, by bringing splines (not shown) provided on sleeves 151, 152 that the respective synchromesh mechanisms 141, 142 have, into engagement with splines (not shown) provided on both the input gear wheels 121, 131.

Where the parking device according to the aforesaid JP-A-2000-74214 is applied to the automotive transmission 110 having the aforesaid construction, when the shift lever is operated while the vehicle is parked, spline teeth 161 of the sleeve 151 of the first synchromesh mechanism 141 collide with spline teeth 171 of the first input gear wheel 121, and at the same time spline teeth 162 of the sleeve 152 of the second synchromesh mechanism 142 collide with spline teeth 172 of the second input gear wheel 122. As this occurs, a force is applied to the spline teeth 171 of the first input gear wheel 121 by the spline teeth 161 of the sleeve 151 of the first synchromesh mechanism 141 in a direction indicated by an arrow A in the figure, and a force is applied to the spline teeth 172 of the second input gear wheel 122 by the spline teeth 162 of the sleeve 151 of the second synchromesh mechanism 142 in a direction indicated by an arrow B in the figure. This comes to twist the input shaft 111 in different directions from each other, and therefore, it becomes very difficult to bring the splines on the sleeves 151, 152 of both the synchromesh mechanisms 141, 142 into engagement with the splines on both the input gear wheels 121, 131 simultaneously.

The invention was made in view of the problem and an object of at least the preferred embodiments thereof is to provide an automotive transmission which allows the addition of a parking mechanism thereto without altering largely the design of a conventional MT, which can facilitate the operation of a shift lever from the drive range to the parking range or vice versa, and which can ensure the quick locking of driving wheels.

According to a first aspect of the invention, there is provided an automotive transmission for changing the speed of a driving force of a power system in stepped fashion for transmission to driving wheels, comprising:

an input member connected to said power system;
an output member connected to said driving wheels;
a plurality of pairs of gear wheels having different gear ratios which are provided in parallel between said input member and said output member;
a plurality of mechanical clutch mechanisms for connecting said input member with said output member via any pair of said plurality of pairs of gear wheels;
control means for enabling at least two of said plurality of mechanical clutch mechanisms to operate independently; and
range selecting means for performing a shift operation to select a range from a plurality of ranges including a drive range and a parking range,

wherein said transmission is arranged such that when said range selecting means is operated so as to shift to said parking range from any other one of said plurality of ranges, said control means controls said plurality of mechanical clutch mechanisms such that said input member and said output member are connected with each other via pairs of said plurality of pairs of gear wheels which correspond to at least two gear ratios, **characterised in that** said gear wheel pairs corresponding to said two gear ratios include a gear wheel pair corresponding to a slowest forward gear ratio and a gear wheel pair corresponding to a fastest gear ratio.

With the automotive transmission according to the first aspect of the invention, there is provided the construction in which when the vehicle is parked the input member and the output member are connected to each other by way of the two pairs of gear wheels having the different gear ratios via the mechanical clutch mechanism, and in the event that a torque is inputted to the driving wheels of the vehicle which is parked, the input member and the output member are locked to each other by virtue of a circulating torque generated by the torque so inputted. Due to this, the driving wheels are locked and the vehicle does not move, an effectiveness as the parking mechanism being thus obtained. In addition, since the automotive transmission constructed as has been described above can be fabricated easily without altering largely the design of the conventional automated MT, the safety required while the vehicle is parked can be attempted to be increased remarkably while suppressing the increase in production costs.

Preferably, the connection of the input member with the output member by way of the two gear wheel pairs having the different gear ratios is not performed simultaneously but the two shafts are so connected sequentially with a certain time lag being provided therebetween, whereby an ensured connection between the input member and the output member, which could not be obtained with the conventional corresponding transmission, and hence an ensured locking of the driving wheels can be attained.

According to the invention, since the magnitude of the circulating torque which circulates between the output member and the input member while the vehicle is parked can be small, loads acting on the input side and output side change speed gear wheels can be made as small as possible while the vehicle is parked. In particular, in the latter case (the two gear wheel pairs are a combination of the forward gear and the reverse gear), since not only can the magnitude of the circulating torque which circulates between the output member and the input member be made small while the vehicle is parked but also only the connection of the input member and the output member by one of the two gear wheel pairs may be released, the vehicle is allowed to start smoothly.

Furthermore, according to a preferred aspect of the invention, there is provided an automotive transmission wherein, when the range selecting means is operated so as to shift from the parking range to any other one of the plurality of ranges preferably the control means sequentially releases the connection by the pairs of gear wheels which correspond to said two gear ratios. According to the construction, when canceling the parked condition of the vehicle, since the connection of the input member and the output member by the two gear wheel pairs can easily be released, the locking of the driving wheels can be implemented easily and quickly.

Certain preferred embodiments of the invention will now be described by way of example and with reference to the accompanying drawings in which:

Fig. 1 is a sectional view showing the schematic construction of an automotive transmission according to an embodiment of the invention;

Fig. 2 is a skeleton diagram showing the schematic construction of the automotive transmission of the embodiment;

Fig. 3 is a table showing relationships between signals outputted to first to fourth electric motors by an electronic control unit and shifted conditions of the transmission when the signals are so outputted in the automotive transmission of the embodiment;

Fig. 4 is a skeleton diagram of the transmission showing a condition in which an input shaft and an output shaft are connected to each other by way of two gear wheel pairs having different gear ratios so that a force can be transmitted between both the shafts;

Fig. 5 is a flowchart showing an example of the flow of a control implemented by the electronic control unit when a shift lever is operated to shift to P range from D, N or R range;

Fig. 6 is a flowchart showing another example of the flow of a main routine of a control implemented by the electronic control unit when a shift lever is operated to shift to P range from D, N or R range;

Fig. 7 is a flowchart showing the flow of a sub-routine existing in the main routine of Fig. 6;

Fig. 8 is a flowchart showing an example of the flow of a control implemented by the electronic control unit when the shift lever is operated to shift from P range to D (or R) range;

Fig. 9 is a flowchart showing an example of the flow of a control implemented by the electronic control unit when an operation is carried out for halting an engine;

Fig. 10 is a flowchart showing an example of the flow of a control implemented by the electronic control unit when an operation is carried out for starting the engine;

Fig. 11 is a simplified skeleton diagram showing the schematic construction of a parking mechanism in a conventional automotive transmission;

Fig. 12 is a skeleton diagram showing the schematic construction of an automotive transmission according to a second embodiment of the invention; and

Fig. 13 is a table showing relationships between signals outputted to first to fourth electric motors by an electronic control unit and shifted conditions of the transmission when the signals are so outputted in the automotive transmission of according to the second embodiment.

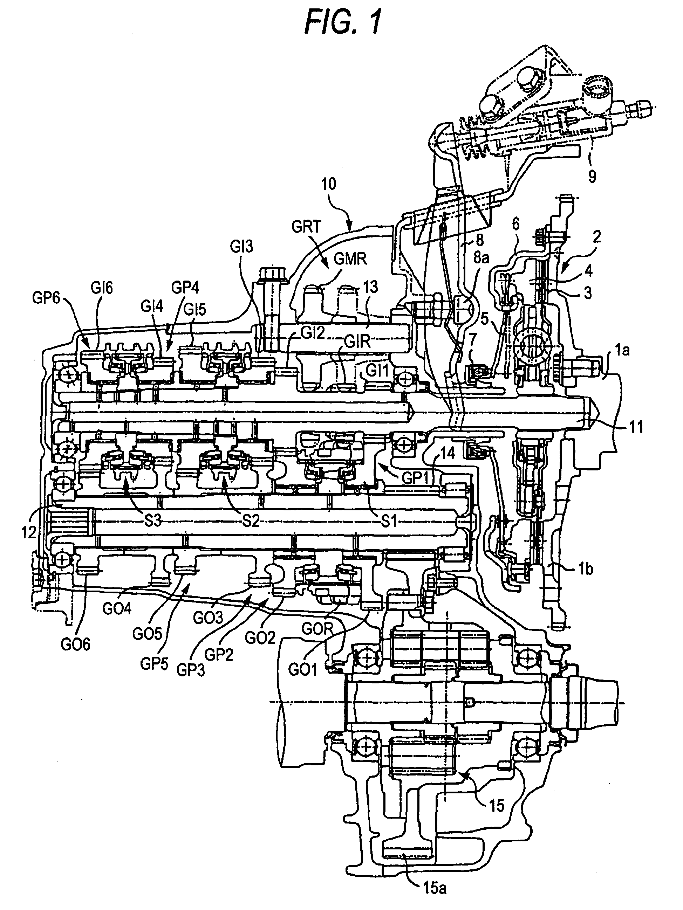

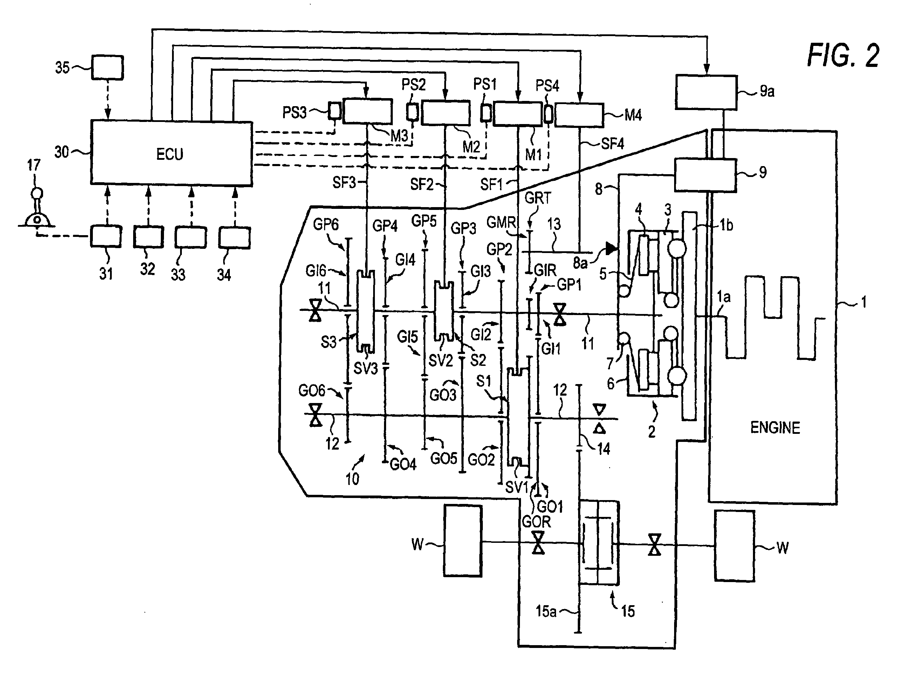

Figs. 1 and 2 show the schematic construction of an automotive transmission according to an embodiment of the invention. This automotive transmission 10 (hereinafter, simply referred to as a transmission) is such as to change the speed of a rotational driving force (torque) of an engine 1 as a power system for transmission to driving wheels W, W and includes a starting clutch 2 for connecting or disconnecting the engine 1 to or from an input shaft 11 and an electronic control unit (ECU) 30 for controlling the power connecting or disconnecting operation of the clutch 2 and the change speed operation of the transmission 10.

The clutch 2 includes a friction disc 3, a pressure disc 4 and a diaphragm spring 5 which are disposed in that order between a flywheel 1b connected to a crankshaft 1a of the engine 1 and the transmission 10. The friction disc 3 is fixed to one end of the input shaft 11 of the transmission 10. The diaphragm spring 5 is supported on a clutch cover 6 at a central portion thereof and connects at an inner end portion thereof to a release bearing 7 which is made to slide freely relative to the input shaft 11 of the transmission 10. In addition, the diaphragm spring 5 abuts with the pressure disc 4 at an outer end thereof so as to bias the pressure disc 4 toward the friction disc 3. One end portion of a release fork 8 is connected to the release bearing 7. The release fork 8 is supported rotatably by a fulcrum 8a at an intermediate portion thereof, and a starting actuator 9 is connected to the other end portion of the release fork 8.

According to the construction, while the starting actuator 9 is in an inoperative condition, the friction disc 3 is held between the pressure disc 4 and the flywheel 1b by virtue of the biasing force of the diaphragm spring 5, whereby the input shaft 11 of the transmission 10 is allowed to connect to the crankshaft 1a of the engine 1 by way of the friction disc 3 and the flywheel 1b, the clutch 2 being thereby put in an engaged condition. In contrast, when the starting actuator 9 is activated, as the release fork 8 rotates about the fulcrum 8a in a counterclockwise direction as shown in Fig. 2, the release bearing 7 presses against the diaphragm spring 5 to thereby deform the spring elastically, causing it to be separated from the pressure disc 4, where the friction disc 3 is released from the held condition, and the connection between the input shaft 11 of the transmission 10 and the crankshaft 1a of the engine 1 is cut off, the clutch 2 being thereby put in a disengaged condition.

The starting actuator 9 is of a hydraulic or electric type and the operation thereof is controlled by a control signal from the electronic control unit 30 via a hydraulically or electrically operating device 9a.

The transmission 10 includes the input shaft (main shaft) 11, an output shaft (counter shaft) 12, forward first to sixth speed gear wheel pairs GP1 to GP6, a reverse gear wheel shaft 13 and a reverse gear wheel train GRT. The input shaft 11, output shaft 12 and reverse gear wheel shaft 13 are disposed in parallel with each other, and disposed sequentially on these shafts are the first (speed) gear wheel pair GP1, the reverse gear wheel train GRT, the second (speed) gear wheel pair GP2, the third (speed) gear wheel pair GP3, the fifth (speed) gear wheel pair GP5, the fourth (speed) gear wheel pair GP4 and the sixth (speed) gear wheel pair GP6 in that order as viewed from the engine 1 side.

The first gear wheel pair GP1 is constituted by a first input gear wheel GI1 provided on the input shaft 11 and a first output gear wheel GO1 provided on the output shaft 12. The second gear wheel pair GP2 is constituted by a second input gear wheel GI2 provided on the input shaft 11 and a second output shaft GO2 provided on the output shaft 12. The third gear wheel pair GP3 is constituted by a third input gear wheel GI3 provided on the input shaft 11 and a third output gear wheel GO3 provided on the output shaft 12. The fifth gear wheel pair GP5 is constituted by a fifth input gear wheel GI5 provided on the input shaft 11 and a fifth output gear wheel GO5 provided on the output shaft 12.

The fourth gear wheel pair GP4 is constituted by a fourth input gear wheel GI4 provided on the input shaft 11 and a fourth output gear wheel G04 provided on the output shaft 12. The sixth gear wheel pair GP6 is constituted by a sixth input gear wheel GI6 provided on the input shaft 11 and a sixth output gear wheel GO6 provided on the output shaft 12. The input gear wheels and output gear wheels which constitute the respective gear wheel pairs normally mesh with each other, and the higher gear speeds have smaller gear ratios. In addition, the reverse gear wheel train GRT is constituted by a reverse input gear wheel GIR provided on the input shaft 11, a reverse output gear wheel GOR provided on the output shaft 12 and a reverse intermediate gear wheel GMR provided on the reverse gear wheel shaft 13.

The first input gear wheel GI1 and the second input gear wheel GI2 are attached to the input shaft 11 in such a manner as to rotate together with the input shaft 11, whereas the first output gear wheel GO1 and the second output gear wheel GO2 are attached to the output shaft 12 in such a manner as to rotate idly on the output shaft 12. A first synchromesh mechanism S1 is provided on the output shaft 12 at a position between the first output gear wheel GO1 and the second output gear wheel GO2, and a sleeve SV1 of the first synchromesh mechanism S1 is moved in an axial direction of the output shaft 12 by means of a first shift fork SF1 so that splines (not shown) formed in an inner circumferential surface of the sleeve SV1 fit on splines (not shown) formed on an outer circumferential surface of the first output gear wheel GO1 or splines (not shown) formed on an outer circumference of the second output gear wheel GO2, whereby the relevant gear wheel and the output shaft 12 can be brought into connection with each other.

Here, where the first output gear wheel GO1 and the output shaft 12 are connected to each other, the power of the input shaft 11 is transmitted to the output shaft 12 by way of the first gear wheel pair GP1 (the first input gear wheel GI1 and the first output gear wheel GO1), whereby the transmission 10 is put in a first speed gear condition, and where the second output gear wheel GO2 and the output shaft 12 are connected to each other, the power of the input shaft is transmitted to the output shaft 12 by way of the second gear wheel pair GP2 (the second input gear wheel GI1 and the second output gear wheel GO2), whereby the transmission 10 is put in a second speed gear condition. Note that the first shift fork SF1 for moving the first synchromesh mechanism S1 is driven by the electronic control unit 30 via a first electric motor M1.

The third input gear wheel GI3 and the fifth input gear wheel GI5 are attached to the input shaft 11 in such a manner as to rotate idly on the shaft, whereas the third output gear wheel GO3 and the fifth output gear wheel GO5 are attached to the output shaft 12 in such a manner as to rotate together with the shaft. A second synchromesh mechanism S2 is provided on the input shaft 11 at a position between the third input gear wheel GI3 and the fifth input gear wheel GI5, and a sleeve SV2 of the second synchromesh mechanism S2 is moved in an axial direction of the input shaft 11 by means of a second shift fork SF2 so that splines (not shown) formed in an inner circumferential surface of the sleeve SV2 fit on splines (not shown) formed on an outer circumferential surface of the third input gear wheel GI3 or splines (not shown) formed on an outer circumference of the fifth input gear wheel GI5, whereby the relevant gear wheel and the input shaft 11 can be brought into connection with each other.

Here, where the third input gear wheel GI3 and the input shaft 11 are connected to each other, the power of the input shaft 11 is transmitted to the output shaft 12 by way of the third gear wheel pair GP3 (the third input gear wheel GI3 and the third output gear wheel GO3), whereby the transmission 10 is put in a third speed gear condition, and where the fifth input gear wheel GI5 and the input shaft 11 are connected to each other, the power of the input shaft 11 is transmitted to the output shaft 12 by way of the fifth gear wheel pair GP5 (the fifth input gear wheel GI5 and the fifth output gear wheel GO5), whereby the transmission is put in a fifth speed gear condition. Note that the second shift fork SF2 for moving the second synchromesh mechanism S2 is driven by the electronic control unit 30 via a second electric motor M2.

The fourth input gear wheel GI4 and the sixth input gear wheel GI6 are attached to the input shaft 11 in such a manner as to rotate idly on the shaft, whereas the fourth output gear wheel GO4 and the sixth output gear wheel GO6 are attached to the output shaft 12 in such a manner as to rotate together with the shaft. A third synchromesh mechanism S3 is provided on the input shaft 11 at a position between the fourth input gear wheel GI4 and the sixth input gear wheel GI6, and a sleeve SV3 of the third synchromesh mechanism S3 is moved in an axial direction of the input shaft 11 by means of a third shift fork SF3 so that splines (not shown) formed in an inner circumferential surface of the sleeve SV3 fit on splines (not shown) formed on an outer circumferential surface of the fourth input gear wheel GI4 or splines (not shown) formed on an outer circumference of the sixth input gear wheel GI6, whereby the relevant gear wheel and the input shaft 11 can be brought into connection with each other.

Here, where the fourth input gear wheel GI4 and the input shaft 11 are connected to each other, the power of the input shaft 11 is transmitted to the output shaft 12 by way of the fourth gear wheel pair GP4 (the fourth input gear wheel GI4 and the fourth output gear wheel GO4), whereby the transmission 10 is put in a fourth speed gear condition, and where the sixth input gear wheel GI6 and the input shaft 11 are connected to each other, the power of the input shaft 11 is transmitted to the output shaft 12 by way of the sixth gear wheel pair GP6 (the sixth input gear wheel GI6 and the sixth output gear wheel GO6), whereby the transmission is put in a sixth speed gear condition. Note that the third shift fork SF3 for moving the third synchromesh mechanism S3 is driven by the electronic control unit 30 via a third electric motor M3.

The reverse input gear wheel GIR is provided on the input shaft 11 in such a manner as to rotate together with the input shaft 11, and the reverse output gear wheel GOR is provided on the output shaft 12 in such a manner as to rotate together with the output shaft 12. In addition, the reverse intermediate gear wheel GMR is attached to the reverse gear wheel shaft 13 in such a manner as to rotate idly on the reverse gear wheel shaft 13 and is adapted to be moved in an axial direction of the reverse gear wheel shaft 13 by means of a fourth shift fork SF4. The reverse intermediate gear wheel GMR is constructed to mesh with the reverse input gear wheel GIR and the reverse output gear wheel GOR when the reverse intermediate gear wheel GMR is moved from a position illustrated by solid lines to a position illustrated by double-dashed lines in Fig. 1. As this occurs, the power of the input shaft 11 is transmitted to the output shaft 12 by way of the reverse gear wheel train GRT (the reverse input gear wheel GIR, the reverse intermediate gear wheel GMR, and the reverse output gear wheel GOR), whereby the transmission 10 is put in a reverse gear condition. Note that the fourth shift fork SF4 is driven by the electronic control unit 30 via a fourth electric motor M4.

In addition, a final input gear wheel 14 is provided integrally on the output shaft 12, and this final input gear wheel 14 normally meshes with a final output gear wheel 15a of a differential mechanism 15. Therefore, the speed of the driving force of the engine 1 is changed at a required gear ratio by the transmission 10, and the driving force whose speed is so changed is then transmitted from the output shaft 12 to the driving wheels W, W by way of the differential mechanism 15.

A shift lever 17 is provided in the vicinity of a driver' s seat for the driver to operate it to select ranges, and a shift switch (not shown) is provided on a rear surface of a steering wheel for the driver to operate it to change the gears (upshifting and downshifting) of the transmission 10. The driver can select any of D (forward driving) range, R (reverse) range, N (neutral) range and P (parking) range by operating the shift lever 17. Additionally, the driver can perform any change gear operation according to a running condition by operating the shift switch while the shift lever 17 is engaged in the D range.

The electronic control unit 30 includes a micro computer having, in turn, a RAM, a ROM, a CPU and an I/O interface (none of them is shown) and controls the change gear operation of the transmission 10 or the operations of the first to fourth electric motors M1, M2, M3, M4 according to the operated conditions of the shift lever 17 and the shift switch.

The electronic control unit 30 controls the operation of the starting actuator 9 and the shift operation of the transmission 10 (the operations of the first to fourth electric motors M1, M2, M3, M4) according to a selected range (a range selected by way of the shift lever 17) detected by a selected range detecting sensor 31, the operated condition of the shift switch detected by a shifted gear detecting sensor 32, the engaged or disengaged condition of the clutch 2 detected by a clutch engagement/disengagement detecting sensor 33, the speed of the engine 1 detected by an engine speed detecting sensor 34 and the speed of the vehicle detected by a vehicle speed sensor 35. In addition, detected information is designed to be inputted into the electronic control unit 30 from first to fourth shift fork position sensors PS1, PS2, PS3, PS4 for detecting driven positions of the first to fourth shift forks SF1, SF2, SF3, SF4 which are driven by the first to fourth electric motors M1, M2, M3, M4. The electronic control unit 30 can detect which gear wheel is being connected to which shaft at a certain point in time based on detected information from these first to fourth shift fork position sensors PS1, PS2, PS3, PS4.

Here, when receiving a neutral position signal from the electronic control unit 30, the first electric motor M1 locates the first sift fork SF1 at a neutral position or a position where the sleeve SV1 of the first synchromesh mechanism S1 is brought into engagement with neither the first output gear wheel GO1 nor the second output gear wheel GO2, and when receiving a first shift position signal from the electronic control unit 30, locates the first shift fork SF1 at a first shift position or a position where the sleeve SV1 of the first synchromesh mechanism S1 is brought into engagement with the first output gear wheel GO1. In addition, when receiving a second shift signal from the electronic control unit 30 the first electric motor M1 locates the first shift fork SF1 at a second shift position or a position where the sleeve SV1 of the first synchromesh mechanism S1 is brought into engagement with the second output gear wheel GO2.

In addition, when receiving a neutral position signal from the electronic control unit 30, the second electric motor M2 locates the second sift fork SF2 at a neutral position or a position where the sleeve SV2 of the second synchromesh mechanism S2 is brought into engagement with neither the third input gear wheel GI3 nor the fifth input gear wheel GI5, and when receiving a first shift position signal from the electronic control unit 30, locates the second shift fork SF2 at a first shift position or a position where the sleeve SV2 of the second synchromesh mechanism 32 is brought into engagement with the third input gear wheel GI3. In addition, when receiving a second shift signal from the electronic control unit 30 the second electric motor M2 locates the second shift fork SF2 at a second shift position or a position where the sleeve SV2 of the second synchromesh mechanism S2 is brought into engagement with the fifth input gear wheel GI5.

Additionally, when receiving a neutral position signal from the electronic control unit 30, the third electric motor M3 locates the third sift fork SF3 at a neutral position or a position where the sleeve SV3 of the third synchromesh mechanism S3 is brought into engagement with neither the fourth input gear wheel GI4 nor the sixth input gear wheel GI6, and when receiving a first shift position signal from the electronic control unit 30, locates the third shift fork SF3 at a first shift position or a position where the sleeve SV3 of the third synchromesh mechanism S3 is brought into engagement with the fourth input gear wheel GI4. In addition, when receiving a second shift signal from the electronic control unit 30 the third electric motor M3 locates the third shift fork SF3 at a second shift position or a position where the sleeve SV3 of the third synchromesh mechanism S3 is brought into engagement with the sixth input gear wheel GI6.

In addition, when receiving a neutral position signal from the electronic control unit 30 the fourth electric motor M4 locates the fourth shift fork at a neutral position or a position where the reverse intermediate gear wheel GMR is separated away from both the reverse input gear wheel GIR and the reverse output gear wheel GOR. Furthermore, when receiving a shift signal from the electronic control unit 30 the fourth electric motor M4 locates the fourth shift fork SF4 at a shift position or a position where the reverse intermediate gear wheel GMR is brought into engagement with both the reverse input gear wheel GIR and the reverse output gear wheel GOR.

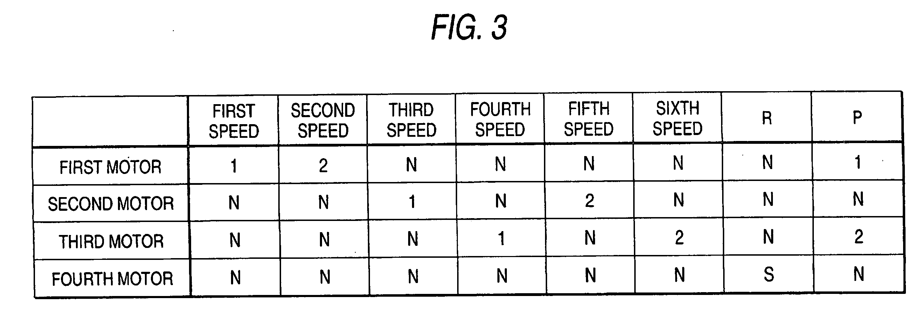

According to these configurations, shift conditions such as the first to sixth speed and reverse gear conditions can be attained when the electronic control unit 30 outputs combinations of signals shown in a table in Fig. 3 to the first to fourth electric motors M1, M2, M3, M4. Note that in the table in Fig. 3, the neutral position signal, the first shift signal and the second shift signal which are outputted from the electronic control unit 30 are denoted by reference character "N", reference numeral "1" and reference numeral "2", respectively. In addition, the shift signal for locating the reverse intermediate gear wheel GMR at the shift position is denoted by reference character "S".

In addition, when detecting that the vehicle is parked or detecting based on detected information from the selected range detecting sensor 31 that the shift lever 17 is operated to shift to the parking range from any of the other ranges, the electronic control unit 30 is designed to output, as shown in the table in Fig. 3, the first sift signal to the first electric motor M1 and the second shift signal to the third electric motor M3, whereby the input shaft 11 and the output shaft 12 are connected to each other (or put in a power transmittable condition) by way of the two gear wheel pairs having different gear ratios (here, the first gear wheel pair GP1 and the sixth gear wheel pair GP6) when the vehicle is parked, and in the event that a torque is inputted into the driving wheels W, W of the vehicle which is being parked, the input shaft 11 and the output shaft 12 are locked to each other by virtue of a circulating torque (which will be described later) generated by the torque so inputted. Due to this, the driving wheels W, W are locked up and therefore the vehicle remains stationary, effectiveness as a parking mechanism being thereby obtained.

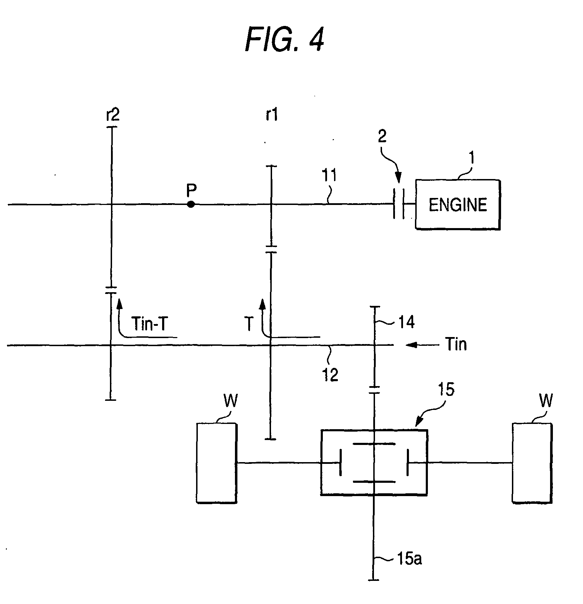

Fig. 4 is a simplified skeleton diagram showing a condition of the transmission 10 in which the input shaft 11 and the output shaft 12 are connected to each other by way of any two gear wheel pairs having different gear ratios so that the power (torque) can be transmitted between the two shafts. Here, there is provided a relationship between r1 and r2 that r1 (low speed gear) $\geqq$ r2 (high speed gear) . In this condition, when a force (input torque Tin) attempting to move the vehicle is applied from the driving wheels W, W the input torque Tin that has entered the output shaft 12 from the driving wheels W, W is transmitted to the input shaft 11 from the gear wheel pairs r1 and r2 while being distributed according to the gear ratios thereof. For example, assuming that the torque Tin that has entered the output shaft 12 from the driving wheels W, W is transmitted to the input shaft 11 from the gear wheel pairs having gear ratios r1 and r2 while being distributed to a torque T (referred to as the circulating torque) according to the gear ratio r1 and a torque (Tin-T) according to the gear ratio r2, the torques transmitted from both the gear wheel pairs are offset at a point P on the input shaft 11, and the following expression (1) is established.

[Expression 1]

$$(Tin-T)/r2 = -T/r1 \quad . \ . \ . \ (1)$$

From Expression (1) the following expression (2) is induced.

[Expression 2]

$$T=(Tin \times r1)/(r1-r2)$$
$$=Tin/(1-r2/r1) \quad . \quad . \quad . \quad (2)$$

It follows from Expression (2) that since the larger the absolute value of (1-r2/r1) becomes the smaller the circulating torque becomes, r1 becomes good when the gear ratio increases, whereas r2 becomes good when the gear ratio decreases. Therefore, it is preferable to connect the input shaft 11 and the output shaft 12 by way of the gear wheel pair having a smallest gear ratio and the gear wheel pair having a largest gear ration among the plurality of gear wheel pairs that the transmission 10 has, whereby the circulating torque can be made small to thereby reduce loads applied to the gear wheels. Owing to this, in the embodiment, the input shaft 11 and the output shaft 12 are constructed to be connected to each other by way of the first gear wheel pair GP1 and the sixth gear wheel pair GP6. This is, however, one of preferred examples, and as long as the input shaft 11 and the output shaft 12 are connected to each other by way of two gear wheel pairs having different gear ratios, any combination may be adopted.

In addition, with the transmission 10, the connection of the input shaft 11 with the output shaft 12 by way of the two gear wheel pairs having the different gear ratios is not implemented simultaneously but is implemented sequentially with a certain time lag, whereby an ensured connection of the input shaft 11 and the output shaft 12 that has been unable to be attained with the conventional automated MT can be attained (here, specifically, engagement of the input gear wheel or output gear wheel with the sleeve of the corresponding synchromesh mechanism), and hence an ensured locking of the driving wheels can be attained. With the construction disclosed in the aforesaid JP-A-2000-74214, the connection of the splines formed in the inner circumferential surface of the sleeve of the synchromesh mechanism with the splines formed on the outer circumferential surface of the gear wheel needs to be implemented simultaneously for the two gear wheel pairs, and as has been described above with reference to Fig. 11, it is very difficult to implement the connection of the splines of the sleeve of the synchromesh mechanism with the splines of the gear wheel simultaneously for the two gear wheel pairs. Moreover, in the event that the simultaneous engagement of the splines for the two pairs is not performed properly, it becomes difficult to bring the vehicle in the parked condition. According to the construction of the embodiment, however, since the engagement of the two pairs of sleeves and gear wheels may be performed such that the engagement of the second pair of sleeve and gear wheel is implemented only after the engagement of the first pair has been completed, these two engagements can be implemented in smooth fashion. This is because when the first sleeve is brought into engagement with the corresponding gear wheel and then the second sleeve is moved toward the corresponding gear wheel, a meshing margin resulting when the second sleeve is brought into engagement with the corresponding gear wheel is increased by a backlash (i.e., play) resulting between the first sleeve and the corresponding gear wheel when they have been brought into engagement with each other.

Thus, with the transmission 10 according to the embodiment, when the vehicle is parked, the input shaft 11 and the output shaft 12 are constructed to be connected to each other by way of the two gear wheel pairs having the different gear ratios via the mechanical mechanisms or the mechanisms for connecting the input shaft 11 with the output shaft 12 by way of any two of the plurality of gear wheel pairs (the first to sixth gear wheel pairs GP1, GP2, GP3, GP4, GP5, GP6 and reverse gear wheel train GRT) provided between the input shaft 11 and the output shaft 12 (here, the first to fourth electric motors M1, M2, M3, M4, the first to fourth shift forks SF1, SF2, SF3, SF4, and the first to third synchromesh mechanisms S1, S2, S3). In addition, the connection of the input shaft 11 and the output shaft 12 by way of the two gear wheel pairs having the different gear ratios is designed to be implemented in ensured and quick fashion by carrying out the connection of the two shafts 11, 12 sequentially with a certain time lag. In addition, since the automotive transmission constructed as has been described heretofore can be fabricated easily without largely altering the design of the conventional automated MT, the safety when the vehicle is parked can be attempted to be improved remarkably while suppressing the increase in production costs.

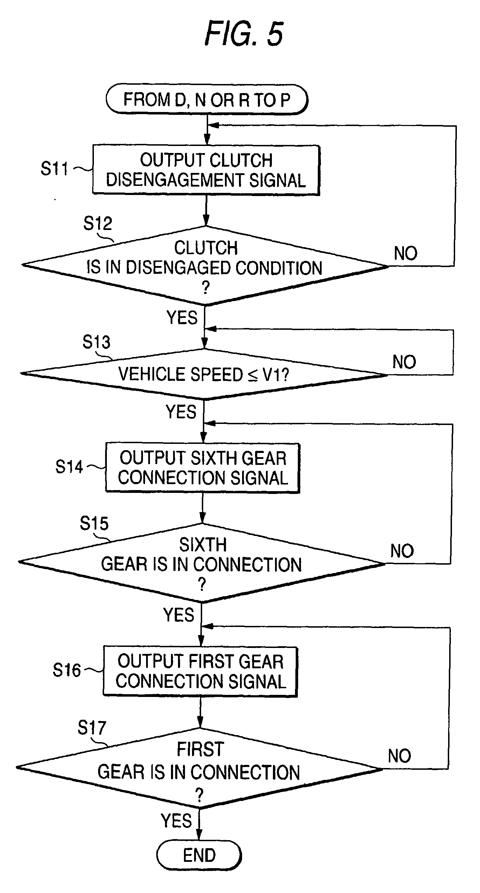

Figs. 5 to 10 show examples of flows of control implemented by the electronic control unit 30 in order to meet shift operations made by way of the shift lever 17 in the vehicle provided with the automotive transmission according to the invention.

Fig. 5 is an example of a control implemented by the electronic control unit 30 when the shift lever 17 is shifted to the P range from the D, N or R range. When the electronic control unit 30 detects based on detected information from the selected range detecting sensor 31 that the shift lever 17 is shifted to the P range from the D, N or R range, the electronic control unit 30 firstly outputs a clutch disengagement signal for bringing the clutch 2 in a disengaged condition (Step S11), and , following this, determines whether or not the clutch 2 is actually in the disengaged condition based on detected information from the clutch engagement/disengagement detecting sensor 33 (Step S12). Here, in the event that the electronic control units 30 determines that the clutch 2 is not in the disengaged condition, the flow returns to Step S11, where the electronic control units 30 outputs a clutch disengagement signal again.

In contrast, in Step S12, in the event that the electronic control units 30 determines that the clutch 2 is in the disengaged condition, the control unit continues to determine whether or not the vehicle speed is equal to or less than a predetermined very slow speed V1 (for example, 10km/h) based on vehicle speed information detected by the vehicle speed sensor 35 (Step S13). In the event that the electronic control units 30 determines that the vehicle speed is not equal to or less than the predetermined very slow speed V1, the control unit continues the determination of the vehicle speed. In contrast, in Step 13, in the event that the electronic control units 30 determines that the vehicle speed is equal to or less than the predetermined very slow speed V1, the control unit outputs a sixth gear wheel connection signal for allowing the sixth input gear wheel GI6 to be connected with the input shaft 11 (or allowing the sleeve SV3 of the third synchromesh mechanism S3 to be connected with the sixth input gear wheel GI6) (Step S14). Note that this operation corresponds to outputting the second shift signal to the third electric motor M3.

Following the above, the electronic control unit 30 determines based on an output from the third shift fork position sensor PS3 whether the sixth input gear wheel GI6 is in connection with the input shaft 11 (Step S15), and in the event that the electronic control unit 30 determines that the sixth input gear wheel GI6 is not in connection with the input shaft 11, the flow returns to Step S14, where the electronic control unit 30 outputs a sixth gear wheel connection signal again. In contrast, in Step 15, in the event that the electronic control unit 30 determines that the sixth input gear wheel GI6 is in connection with the input shaft 11, the control unit continues to output a fist gear wheel connection signal for allowing the first output gear wheel GO1 to be connected with the output shaft 12 (or allowing the sleeve SV1 of the first synchromesh mechanism S1 to be connected with the first output gear wheel GO1) (Step S16). Note that this operation corresponds to outputting the first shift signal to the first electric motor M1.

Following the above, the electronic control unit 30 determines based on an output from the first shift fork position sensor PS1 whether or not the first output gear wheel GO1 is in connection with the output shaft 12 (Step S17), and in the event that the electronic control unit 30 determines that the first output gear wheel GO1 is not in connection with the output shaft 12, the flow returns to Step 16, where the electronic control unit 30 outputs a first gear wheel connection signal again. In contrast, in Step S17, in the event that the electronic control unit 30 determines that the first output gear wheel GO1 is in connection with the output shaft 12, the series of control operations is completed.

The input shaft 11 and the output shaft 12 are connected to each other by way of the two gear wheel pairs having the different gear ratios (here, the first gear wheel pair GP1 and the sixth gear wheel pair GP6) through the controls implemented by the electronic control unit 30. Here, according to the flow shown in Fig. 5, a sequence is adopted in which after the vehicle speed becomes equal to or less than the predetermined very slow speed, firstly the sleeve SV3 of the third synchromesh mechanism S3 is connected with the sixth input gear wheel GI6 (or connecting the input shaft 11 with the sixth input gear wheel GI6), and thereafter, the sleeve SV1 of the first synchromesh mechanism S1 is connected with the first output gear wheel GO1 (or connecting the output shaft 12 with the first output gear wheel GO1). The combination of the first gear wheel pair GP1 and the sixth gear wheel pair GP6 is the combination according to the invention. In addition, the combination is not limited to two gear wheel pairs, and a combination of any other plural number of gear wheel pairs (three or more gear wheel pairs) may be adopted.

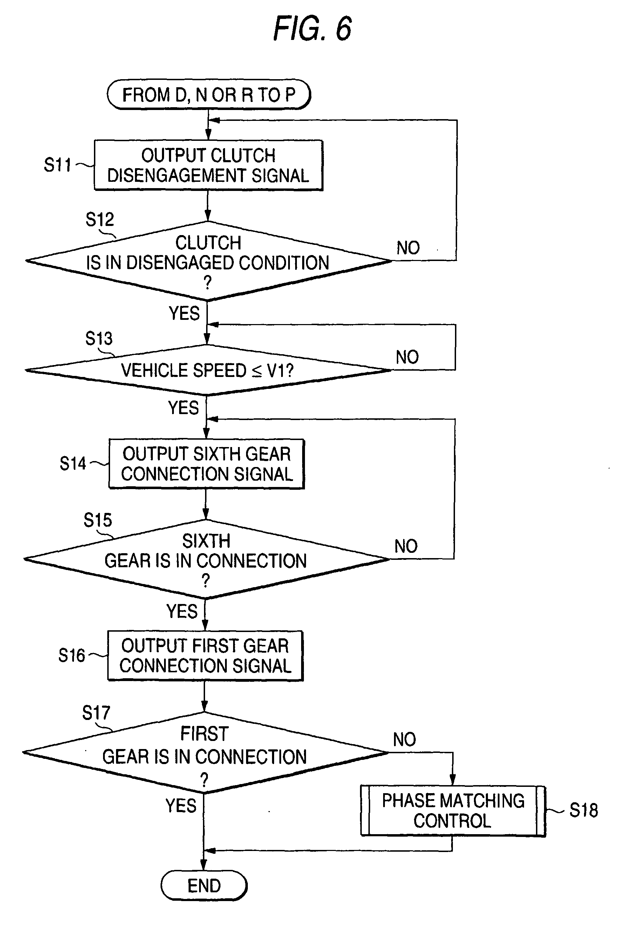

Fig. 6 shows another example of a control implemented by the electronic control unit 30 when the shift lever 17 is shifted from the D, N or R range to the P range. This example is identical with the example described with reference to Fig. 5 in that in Step 17 in the flow shown in Fig. 5, the electronic control unit 30 determines whether or not the first output gear wheel GO1 is in connection with the output shaft 12, and in the event that the control unit determines that the first output gear wheel GO1 is not in connection with the output shaft 12, the series of control operations is completed but is different from the example in Fig. 5 in that there is provided a different process in the event that the electronic control unit 30 determines that the first output gear wheel GO1 is not in connection with the output shaft 12 in Step S17. Namely, in the event that the electronic control unit 30 determines that the first output gear wheel GO1 is not in connection with the output shaft 12 in Step 17, the flow does not return to Step S16 but, as shown in Fig. 6, enters a sub-routine for phase matching control (Step S18).

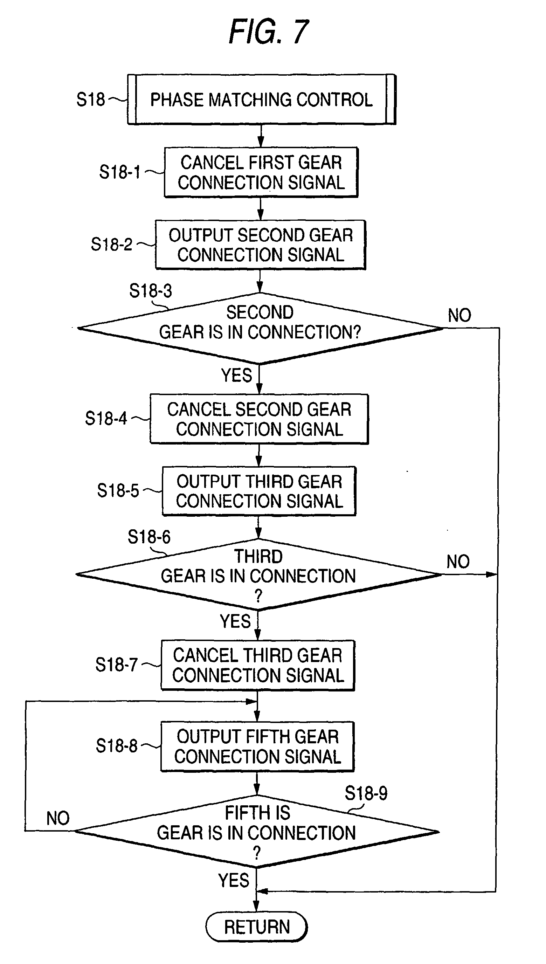

As shown in Fig. 7, in this phase matching control sub-routine, firstly, the electronic control units 30 cancels the first gear wheel connection signal outputted in Step S16 (Step S18-1), and following this, outputs a second gear wheel connection signal for allowing the second output gear wheel GO2 to be connected with the output shaft 12 (or allowing the sleeve SV1 of the first synchromesh mechanism S1 to be connected with the second output gear wheel GO2) (Step S18-2). Then, the electronic control unit 30 determines based on an output from the first shift fork position sensor PS1 whether or not the second output gear wheel GO2 is in connection with the output shaft 12 (Step 18-3), and in the event that the control unit determines that the second output gear wheel GO2 is in connection with the output shaft 12, this sub-routine is completed and the flow returns to the main routine (the routine shown in Fig. 6).

In contrast, in the event that the electronic control unit 30 determines that the second output gear wheel GO2 is not in connection with the output shaft 12 in step S18-3, the control unit cancels the second gear wheel connection signal outputted in step S18-2 (Step S18-4), and following this, outputs a third gear wheel connection signal for allowing the third input gear wheel GI3 to be connected with the input shaft 11 (or allowing the sleeve V2 of the second synchromesh mechanism S2 to be connected with the third input gear wheel GI3) (Step S18-5). Then, the electronic control unit 30 determines based on an output from the second shift fork position sensor PS2 whether or not the third input gear wheel GI3 is in connection with the input shaft 11 (Step S18-6), and in the event that the control unit determines that the third input gear wheel GI3 is in connection with the input shaft 11, this sub-routine is closed and the flow returns to the main routine.

In contrast, in the event that the electronic control unit 30 determines in Step 18-6 that the third input gear wheel GI3 is not in connection with the input shaft 18, the control unit cancels the third gear wheel connection signal outputted in Step S18-5 (Step S18-7), and following this, outputs a fifth gear wheel connection signal for allowing the fifth input gear wheel GI5 to be connected with the input shaft 11 (or allowing the sleeve SV3 of the third synchromesh mechanism to be connected with the fifth input gear wheel GI5) (Step S18-8). Then, the electronic control unit 30 determines based on an output from the second shift fork position sensor PS2 whether or not the fifth input gear wheel GI5 is in connection with the input shaft 11 (Step S18-9), and in the event that the control unit determines that the fifth input gear wheel GI5 is in connection with the input shaft 11, this sub-routine is completed and the flow returns to the main routine, the series of control operations being thereby completed.

With the control shown in this second example, the two gear wheel pairs having different gear ratios that are used to connect the input shaft 11 with the output shaft 12 are not limited to the first gear wheel pair GP1 and the sixth gear wheel pair GP6. After the sixth input gear wheel GI6 is initially brought into connection with the input shaft 11, connections are tried sequentially between the first output gear wheel GO1 and the output shaft 12, the second output gear wheel GO2 and the output shaft 12, the third input gear wheel GI3 and the input shaft 11, and the fifth input gear wheel GI5 and the input shaft 11 in that order. Then, if there is found any pair of gear wheel and shaft in which the phases of the gear wheel and shaft match with each other to thereby enable them to be connected with each other smoothly, the input shaft 11 and the output shaft 12 are constructed to be connected with each other using the pair providing such a smooth connection. According to the construction, the locking operation of the driving wheels W, W can be ensured further. Note that the sequence described above is only an example, any sequence may be adopted. In addition, the reason why a connection between the fourth input gear wheel GI4 and the input shaft 11 (or between the sleeve SV3 of the third synchromesh mechanism S3 and the fourth input gear wheel GI4) is not tried is because the third synchromesh mechanism S3 has already been brought into connection with the sixth input gear wheel GI6.

In addition, on top of the control illustrated by the flows shown in Figs. 6 and 7 in which connections between the sleeves of the synchromesh mechanisms and gear wheels are tried sequentially to find effective a pair of sleeve and gear wheel that can provide a smooth connection therebetween, another control may be adopted in which phases of the input shaft 11 and the output shaft 12 and gear wheels that are to be connected with these shafts 11, 12 are detected in advance, so that a pair of shaft and gear wheel can be found which can provide a good match in phase difference between the synchromesh mechanism and gear wheel to thereby ensure a proper connection therebetween, then the synchromesh mechanism and the gear wheel of the pair being brought into connection with each other. This enables the locking operation of the driving wheels W, W to be completed quicker.

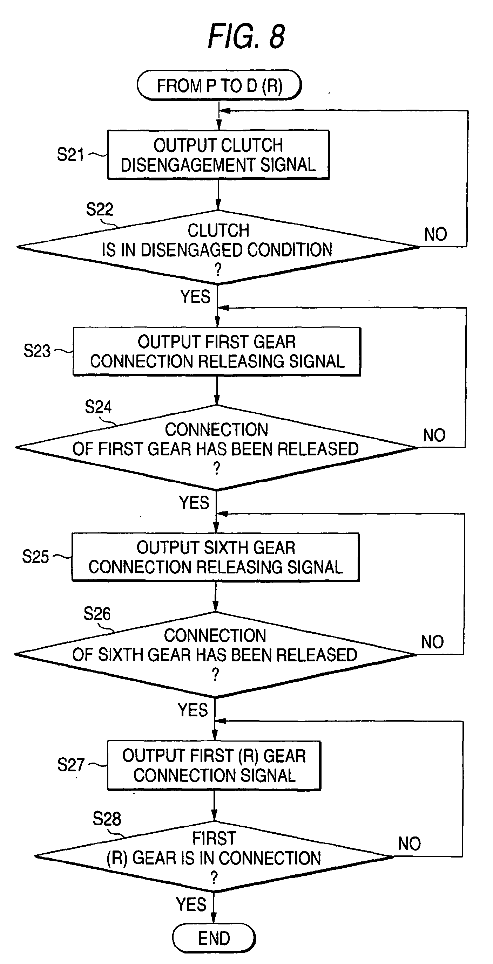

Fig. 8 shows an example of a control implemented by the electronic control unit 30 when the shift lever 17 is shifted from the P range to the D range (or R range). In the event that the electronic control unit 30 detects based on detected information from the selected range detecting sensor 31 that the shift lever 17 has been shifted from the P range to the D range (or R range), the control unit first outputs a clutch disengagement signal for bring the clutch 2 in a disengaged condition (Step S21), and following this, determines based on detected information from the clutch engagement/disengagement detecting sensor 33 whether or not the clutch 2 is actually in the disengaged condition (Step S22). In the event that the electronic control unit 30 determines that the clutch 2 is not in the disengaged condition, the flow returns to Step S21, where the electronic control unit 30 outputs a clutch disengagement signal again.

In contrast, in the event that the electronic control unit 30 determines in Step S22 that the clutch 2 is in the disengaged condition, the control unit continues to output a first gear wheel connection releasing signal for releasing the connection between the first output gear wheel GO1 and the output shaft 12 (Step S23). Note that this operation corresponds to outputting a signal for allowing the first electric motor M1 to take a neutral position. Following this, the electronic control unit 30 determines based on an output from the first shift fork position sensor PS1 whether or not the connection of the first output gear wheel GO1 with the output shaft 12 is released (or whether or not the first electric motor M1 is taking the neutral position) (Step S24). Here, in the event that the electronic control unit 30 determines that the connection of the first output gear wheel GO1 with the output shaft 12 has not yet been released, the flow returns to Step S23, where the control unit outputs a first gear wheel connection releasing signal again. In contrast, in the event that the electronic control unit 30 determines in Step S24 that the connection of the first output gear wheel GO1 with the output shaft 12 has been released, the control unit continues to output a sixth gear wheel connection releasing signal for releasing the connection of the sixth input gear wheel GI6 with the input shaft 11 (Step S25). Note that this operation corresponds to outputting a signal for allowing the third electric motor M3 to take a neutral position.

Following the above, the electronic control units 30 determines based on an output from the third shift fork position sensor PS3 whether or not the connection between the sixth input gear wheel GI6 and the input shaft 11 is released (or whether or not the third electric motor M3 is taking the neutral position) (Step S26), and here, in the event that the electronic control unit 30 determines that the connection between the sixth input gear wheel GI6 and the input shaft 11 has not yet been released, the flow returns to Step 25, where the electronic control unit 30 outputs a sixth gear wheel connection releasing signal again. In contrast, in the event that the electronic control unit 30 determines in Step 26 that the connection between the sixth input gear wheel GI6 and the input shaft 11 has been released, the control unit outputs a first gear wheel connection signal (or, in a way not according to the invention, a reverse gear wheel connection signal) for allowing the first output gear wheel GO1 to be connected with the output shaft 12 (or allowing the sleeve SV1 of the first synchromesh mechanism S1 to be connected with the first output gear wheel GO1) (Step S27). Note that this operation corresponds to outputting the first shift signal to the first electric motor M1 (or outputting a shift signal to the fourth electric motor M4).

Following the above, the electronic control unit 30 determines based on an output from the first shift fork position sensor PS1 whether or not the first output gear wheel GO1 is in connection with the output shaft 12 (Step S28), and in the event that the control unit determines that the first output gear wheel GO1 is not in connection with the output shaft 12, the flow returns to Step S27, where the electronic control unit 30 outputs a first gear wheel connection signal again. In contrast, in the event that the electronic control unit 30 determines in Step S27 that the first output gear wheel GO1 is in connection with the output shaft 12, the series of control operations is completed.

Thus, with the automotive transmission according to the invention, when the shift lever 17 is operated to shift from the P range to any other range (here, to the D range or R range) , the connection of the two shafts 11, 12 by way of the gear wheel pair corresponding to a certain gear ratio is released first, and thereafter, the connection of the two shafts 11, 12 by way of the gear wheel pair corresponding to another gear ratio is released. Due to this, when the vehicle is released from the parked condition the connection of the input shaft 11 with the output shaft 12 by way of the two gear wheel pairs can be easily released, and hence the locking of the driving wheels W, W can be implemented easily and quickly.

In addition, in the flow shown in Fig. 8, when the shift lever 17 is operated to shift from the P range to the R range the electronic control unit 30 determines, in Step S28, based on an output from the fourth shift fork position sensor PS4 whether or not the reverse intermediate gear wheel GMR is in mesh engagement with both the reverse input gear wheel GIR and the reverse output gear wheel GOR (or whether or not the fourth electric motor M4 is moving the reverse intermediate gear wheel GMR toward a direction in which the reverse intermediate gear wheel GMR meshes with both the gear wheels GIR, GOR), and in the event that the electronic control unit 30 determines that the reverse intermediate gear wheel GMR is not in mesh engagement with both the gear wheels GIR, GOR, the flow returns to Step S27, where the control unit outputs a reverse gear connection signal again. In contrast, in the event that the electronic control unit 30 determines in Step S28 that the reverse intermediate gear wheel GMR is in mesh engagement with both the gear wheels GIR, GOR, the series of control operations is completed.

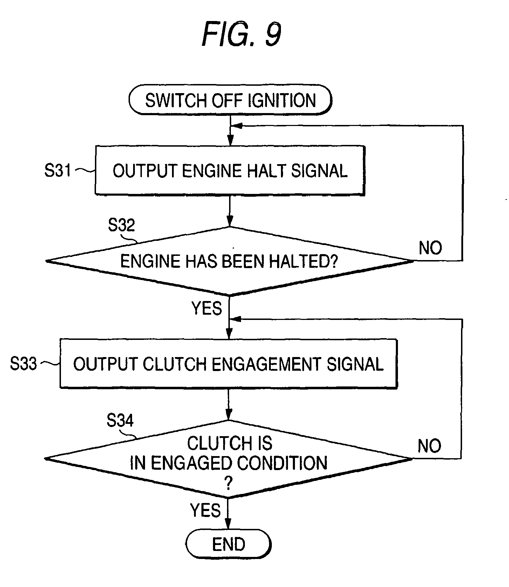

Fig. 9 shows an example of a control implemented by the electronic control unit 30 when an operation is carried out for stopping the engine 1 (an operation for switching off the ignition system) . When an ignition key (not shown) is operated to be situated on an ignition-off side the electronic control unit 30 outputs a signal for halting the engine 1 (Step S31) and determines based on detected information from the engine speed detecting sensor 34 whether or not the engine 1 is actually in a halt condition (Step S32). Here, in the event that the electronic control unit 30 determines that the engine 1 is not in the halt condition, the flow returns to Step S31, where the electronic control unit 30 outputs an engine halt signal again.

In contrast, in the event that the electronic control unit 30 determines in Step S32 that the engine 1 is in the halt condition, the control unit outputs a clutch engagement signal for allowing the clutch 2 to be engaged (Step S33). Then, the electronic control unit 30 determines based on detected information from the clutch engagement/disengagement detecting sensor 33 whether or not the clutch 2 is actually in an engaged condition (Step S34). Here, in the event that the electronic control unit 30 determines that the clutch 2 is not in the engaged condition, the flow returns to Step S33, where the electronic control unit 30 outputs a clutch engagement signal again. In contrast, in the event that the electronic control unit 30 determines that the clutch 2 is in the engaged condition, the series of control operations is completed.

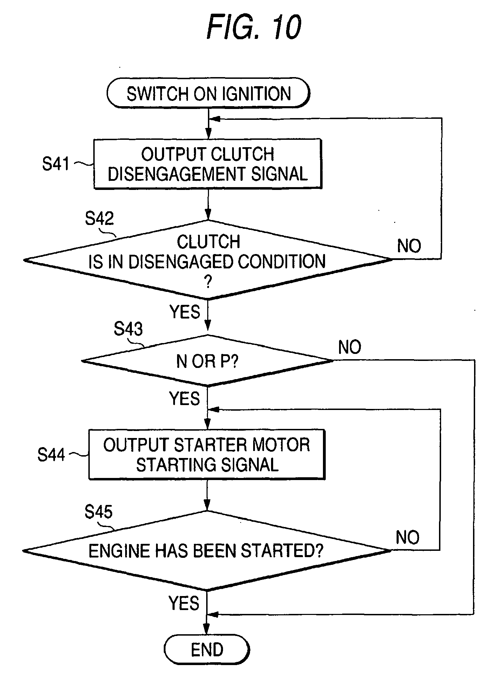

Fig. 10 shows an example of a control implemented by the electronic control unit 30 when an operation is performed for starting the engine. When the ignition key is operated to be situated on an ignition-on side the electronic control unit 30 first outputs a clutch disengagement signal for bringing the clutch 2 in a disengaged condition (Step S41). Then, the electronic control unit 30 determines based on detected information from the clutch engagement/disengagement detecting sensor 33 whether or not the clutch 2 is actually in the disengaged condition (Step S42). Here, in the event that the electronic control unit 30 determines that the clutch 2 is not in the disengaged condition, the flow returns to Step S41, where the electronic control unit 30 outputs a clutch disengagement signal again.

In contrast, in the event that electronic control unit 30 determines in Step S42 that the clutch 2 is in the disengaged condition, the control unit determines based on detected information from the selected range detecting sensor 31 whether or not a selected range is the N or P range (Step S43). Here, in the event that the electronic control unit 30 determines that the selected range is any range other than the N range and P range, the control is completed. In the event that the selected range is the N or P range, the electronic control unit 30 outputs a starter motor starting signal for starting a starter motor (not shown) for the engine 1 (Step S44). Then, the electronic control unit 30 determines based on detected information from the engine speed detecting sensor 34 whether or not the engine 1 is actually in a started condition (Step s45), and in the event that the electronic control unit 30 determines that the engine 1 is not in the started condition, the flow returns to Step S44, where the electronic control unit 30 outputs a starter motor starting signal again. In contrast, the electronic control unit 30 determines in Step S45 that the engine 1 is in the started condition, the series of control operations is completed.

In the flow shown in Fig. 9, the control of allowing the clutch 2 to be engaged after the engine 1 has been halted is needed when the construction is adopted in which the clutch 2 is kept engaged when the engine 1 is halted (while the vehicle is parked), and therefore is not needed for a transmission in which the clutch 2 is disengaged when the engine 1 is halted. In addition, as is clear from the aforesaid description, with automotive transmission according to the invention, since the input shaft 11 and the output shaft 12 are constructed to be locked to each other by circulating the force (torque) between the two shafts 11, 12 by forming the plurality of power transmission paths comprising at least two power transmission gear wheel pairs having different gear ratios, whether the clutch 2 is kept engaged or disengaged when the engine 1 halted is not particularly an issue.

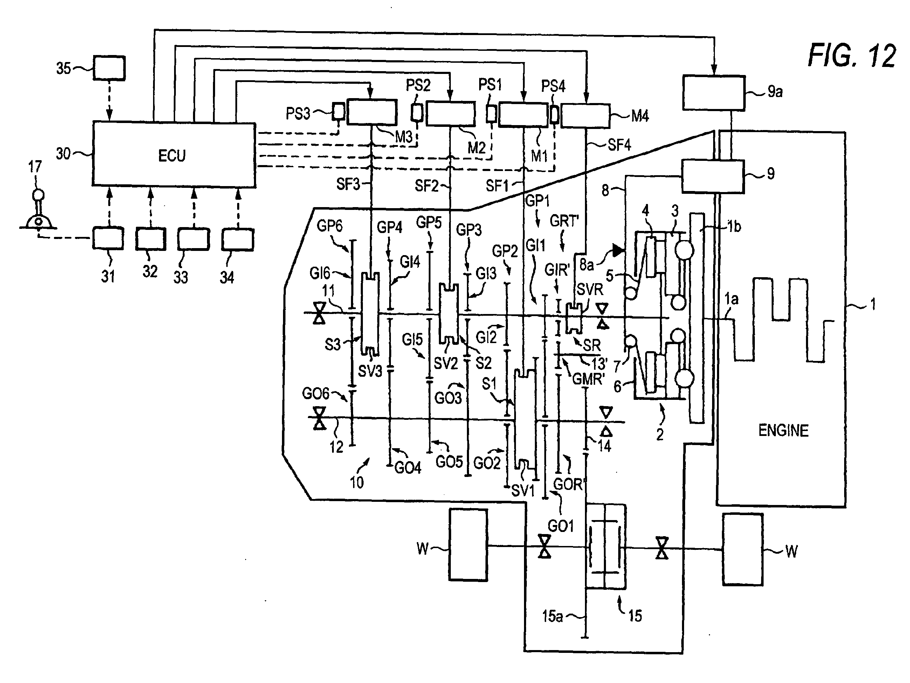

Next, another embodiment (hereinafter, referred to as a second embodiment) of an automotive transmission according to the invention will be described below. Fig. 12 is a skeleton diagram showing the schematic construction of an automotive transmission according to the second embodiment of the invention. The automotive transmission according to the second embodiment differs the automotive transmission according to the aforesaid embodiment (hereinafter, referred to as the first embodiment) only in the construction of the reverse gear wheel train, and therefore, this different part of the automotive transmission will be described below while the description of the other identical parts thereof will be omitted. A reverse input gear wheel GIR' is provided on the input shaft 11 in such a manner as to rotate idly on the shaft, and a reverse output gear wheel GOR' is provided on the output shaft 12 in such a manner as to rotate together with the shaft. In addition, a reverse intermediate gear wheel GMR' is rotatably provided on a reverse gear wheel shaft 13' in such a manner as to be brought into normal mesh engagement with the reverse input gear wheel GIR' and the reverse output gear wheel GOR', respectively.

A reverse synchromesh mechanism SR is provided adjacent to the reverse input gear wheel GIR' on the output shaft 11, and a sleeve SVR of this reverse synchromesh mechanism SR is moved in an axial direction of the input shaft 11 by means of the fourth shift fork SF4 so that splines (not shown) formed in an inner circumferential surface of the sleeve SVR fit on splines (not shown) formed on an outer circumferential surface of the reverse input gear wheel GIR'. As this occurs, the power of the input shaft 11 is transmitted to the output shaft 12 by way of a reverse gear wheel train GRT' (the reverse input gear wheel GIR', the reverse intermediate gear wheel GMR' and the reverse output gear wheel GOR'), whereby the automotive transmission is put in a reverse gear condition. Note that the fourth shift fork SF4 for moving the sleeve SVR of the reverse synchromesh mechanism SR on the input shaft 11 is driven by the electronic control unit 30 via the fourth electric motor M4.

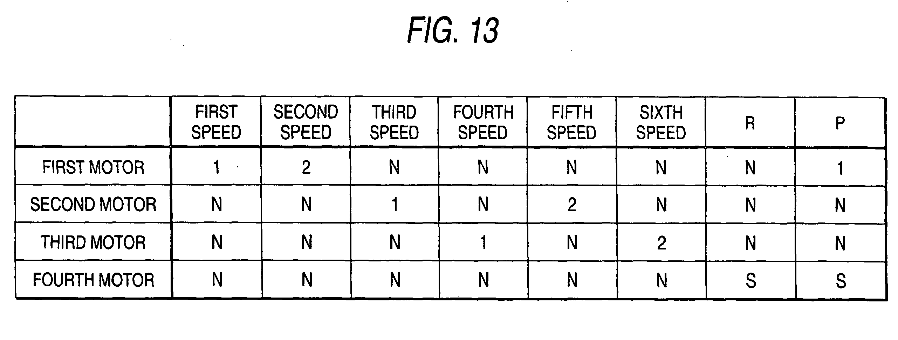

The first electric motor M1, the second electric motor M2, the third electric motor M3 operate the same as they do in the first embodiment, and the fourth electric motor M4 locates the fourth shift fork SF4 at a neutral position or a position where the sleeve SVR of the reverse synchromesh mechanism is brought into disengagement from the reverse input gear wheel GIR' while receiving a neutral position signal from the electronic control unit 30, whereas the fourth electric motor M4 locates the fourth shift fork SF4 at a shift position or a position where the sleeve SVR of the reverse synchromesh mechanism SR is brought into engagement with the reverse input gear wheel GIR' while receiving a shift signal from the electronic control unit 30. Shown in a table in Fig. 13 are combinations of signals that are outputted to the first to fourth electric motors M1, M2, M3, M4 by the electronic control unit 30 in this automotive transmission according to the second embodiment in order to attain first to sixth sped and reverse gear conditions (reference character N and reference numerals 1 and 2 denote the same as they do in Fig. 3). Note that in the table in Fig. 13, a reference character "S" denotes a shift signal for locating the sleeve SVR of the reverse synchromesh mechanism SR at the position where the sleeve SVR is brought into engagement with the reverse input gear wheel GIR'.

In addition, when detecting that the vehicle is parked or detecting based on detected information from the selected range detecting sensor 31 that the shift lever 17 is operated to shift to the parking range from any of the other ranges the electronic control unit 30 is designed to output a first shift signal to the first electric motor M1 and a fourth shift signal to the fourth electric motor M4 (refer to a "P" range column in Fig. 13), whereby the input shaft 11 and the output shaft 12 are connected to each other by way of two gear wheel pairs having different gear ratios (here, in a way not according to the invention, the first gear wheel pair GP1 and the reverse gear wheel train GRT') when the vehicle is parked, and when a torque is inputted in the driving wheels W, W of the vehicle which is parked the input shaft 11 and the output shaft 12 are locked to each other by virtue of a circulating torque generated by the torque so inputted. Due to this, the driving wheels W, Ware locked, whereby effectiveness as a parking mechanism can be attained.

Here, since it is understood from the aforesaid expression (2) that the larger the absolute value of a value of (1-r2/r1) becomes, the smaller the circulating torque becomes, assuming that one of the gears which corresponds to r1 or r2 is the reverse gear, the denominator of the expression (2) is (1+r2/r1), and the absolute value of the denominator becomes larger than what is provided when either of the gears is a forward gear. Then, a better result will be attained in case the absolute values of gear ratios of r1 and r2 are substantially equal to each other. Thus, as with the automotive transmission according to the second embodiment, in the event that a construction not according to the invention is adopted in which the connection of the input shaft 11 with the output shaft 12 by way of the reverse gear wheel train GRT' can be implemented completely independently from the connection of the input shaft 11 with the output shaft 11 by way of any of the other gear wheel pairs, it is preferable to select among the plurality of gear wheel pairs that the transmission has a gear ratio of a forward gear having a value which is closest to the absolute value of the gear ratio of the reverse gear, and then, to connect the input shaft 11 with the output shaft 12 by way of gear wheel pairs corresponding to both the gear ratios, whereby the circulating torque can be reduced, loads applied to the gear wheels being thereby reduced. Since it is normal that the gear ratio of the reverse gear is substantially equal to or larger than the gear ratio of the gear wheel pair (first gear wheel pair) whose gear ratio is the largest among the forward gear wheel pairs, in this second embodiment, the input shaft 11 and the output shaft 12 are connected to each other in a way not according to the invention by way of the first gear wheel pair GP1 and the reverse gear wheel train GRT' so that the two shafts 11, 12 are locked to each other.

In addition, with the automotive transmission according to the second embodiment, as has been described above, since not only can the circulating torque that circulates between the output member 12 and the input member 11 when the vehicle is parked be reduced but also the connection of the two members 11, 12 by way of only either of the gear wheel pairs only has to be released when the vehicle is about to be started by shifting the shift lever 17 from the parking range to the driving range (the D or R range), there is also provided an advantage that the vehicle can be started smoothly.

While the preferred embodiments of the invention have been described heretofore, the scope of the invention is not limited to those embodiments. For example, while the shift forks SF1, SF2, SF3, SF4 are constructed to be driven by means of the electric motors (the first to fourth electric motors M1, M2, M3, M4) in the aforesaid embodiments, the shift forks may be constructed to be driven by means of hydraulic cylinders or the like. In this case, the electronic control unit 30 is configured to control the drive of an electromagnetic valves for controlling hydraulic pressures supplied to the hydraulic cylinders. In addition, while in the above embodiments, the synchromesh mechanisms are used as the mechanical clutches for connecting the input shaft 11 with the output shaft 12 by way of any gear wheel pair of the plurality of gear wheel pairs provided between the two shafts 11, 12, the use of the synchromesh mechanisms is only an example, and a mechanism may be adopted in which selectable sliding gear wheels are connected.

As has been described heretofore, according to the automotive transmission of the invention, the input member and the output member are constructed to be connected to each other by way of the two gear wheel pairs having different gear ratios via the mechanical clutch mechanism when the vehicle is parked, and in the event that a torque is inputted in the driving wheels of the vehicle which is parked, the input member and the output member are locked to each other by virtue of the circulating torque that is generated by the torque so inputted. Due to this, the driving wheels are locked and the vehicle becomes stationary, whereby the effectiveness as the parking mechanism can be attained. In addition, preferably, the connection of the input member with the output member by way of the two gear wheel pairs having different gear ratios is not implemented simultaneously but implemented sequentially with a time lag, whereby the ensured connection of the two members and hence the ensured locking of the driving wheels, which cannot be attained with the conventional automated MT, can be attained. In addition, since the automotive transmission constructed as has been described heretofore can be fabricated easily without largely altering the design of the conventional automated MT, the safety required when the vehicle is parked can be attempted to be improved remarkably while suppressing the increase in production costs.

The gear wheel pairs corresponding to the two gear ratios are according to the invention a gear wheel pair corresponding to the gear ratio of the fastest gear and a gear wheel pair corresponding to the gear ratio of a slowest gear. Alternatively, the gear wheel pairs corresponding to the two gear ratios are preferably a forward gear and a reverse gear. According to the construction, since the magnitude of the circulating torque that circulates between the output member and the input member when the vehicle is parked can be small, loads acting on the gears on the input side and the output side when the vehicle is parked can be kept as small as possible. In particular, in the case not according to the invention of the latter (the two gear wheel pairs comprise a combination of the forward gear and the reverse gear), since not only can the circulating torque that circulates between the output member and the input member when the vehicle is parked be reduced but also the connection of the input member with the output member by way of only either of the gear wheel pairs only has to be released when the vehicle is about to be started by operating the shift lever to shift from the parking range to the driving range (the D or R range), the vehicle can be started smoothly.

Furthermore, the control means preferably releases the gear wheel pairs corresponding to the two gear ratios in sequential fashion when the range selecting means is operated to shift to the parking range from any of the other ranges. According to the construction, when releasing the vehicle from the parked condition, since the connection of the input member and the output member by way of the two gear wheel pairs can be released easily, the locking of the driving wheels can be released easily and quickly.

**Claims**

1. An automotive transmission (10) for changing the speed of a driving force of a power system (1) in stepped fashion for transmission to driving wheels (w), comprising:

   an input member (11) connected to said power system (1);
   an output member (12) connected to said driving wheels (w);
   a plurality of pairs of gear wheels (GP1-GP6, GRT) having different gear ratios which are provided in parallel between said input member (11) and said output member (12);
   a plurality of mechanical clutch mechanisms (S1, S2, S3, SR) for connecting said input member (11) with said output member (12) via any pair of said plurality of pairs of gear wheels (GP1-GP6, GRT);
   control means (30) for enabling at least two of said plurality of mechanical clutch mechanisms (S1, S2, S3, SR) to operate independently; and
   range selecting means (17) for performing a shift operation to select a range from a plurality of ranges including a drive range and a parking range,

   wherein said transmission (10) is arranged such that when said range selecting means (17) is operated so as to shift to said parking range from any other one of said plurality of ranges, said control means (30) controls said plurality of mechanical clutch mechanisms (S1, S2, S3, SR) such that said input member (11) and said output member (12) are connected with each other via pairs of said plurality of pairs of gear wheels (GP1-GP6, GRT) which correspond to at least two gear ratios, **characterised in that** said gear wheel pairs corresponding to said at least two gear ratios include a gear wheel pair (GP1) corresponding to a slowest forward gear ratio and a gear wheel pair (GP6) corresponding to a fastest gear ratio.

2. An automotive transmission (10) as claimed in claim 1, wherein when said range selecting means (17) is operated so as to shift to said parking range from any other one of said plurality of ranges, said control means (30) is arranged to control said plurality of mechanical clutch mechanisms (S1, S2, S3, SR) such that firstly said input member (11) and said output member (12) are connected with each other via one of said plurality of pairs of gear wheels (GP1-GP6, GRT) which corresponds to a certain gear ratio and then said input member (11) and said output member (12) are connected with each other via another of said plurality of pairs of gear wheels (GP1-GP6, GRT) which corresponds to another gear ratio.

3. An automotive transmission (10) as claimed claim 1 or 2, wherein when said range selecting means (17) is operated so as to shift from said parking range to any other one of said plurality of ranges said control means (30) is arranged to sequentially release the connection by said pairs of gear wheels (GP1-GP6, GRT) which correspond to said at least two gear ratios.

4. An automotive transmission as claimed in claim 1, 2 or 3, wherein one of said pairs of gear wheels which corresponds to one of said at least two gear ratios (GP1-GP6, GRT) is a pair of gear wheels (GP1-GP6, GRT) which corresponds to a gear ratio which matches in phase with said input member (11) or said output member (12) to be connected.

**Patentansprüche**

1. Fahrzeuggetriebe (10) zum Ändern der Drehzahl einer Antriebskraft eines Antriebssystems (1) in gestufter Welse für die Übertragung auf Antriebsräder (W), umfassend:

   ein Eingangselement (11), das mit dem Antriebssystem (1) verbunden ist;
   ein Ausgangselement (12), das mit den Antriebsrädern (W) verbunden ist;
   eine Mehrzahl von Paaren von Zahnrädern (GP1-GP6, GRT) mit unterschiedlichen Übersetzungsverhältnissen, die parallel zwischen dem Eingangselement (11) und dem Ausgangselement (12) vorgesehen sind;
   eine Mehrzahl von mechanischen Kupplurigseinrichtungen (S1, S2, S3, SR) zum Verbanden des Elngangselements (11) mit dem Ausgangselement (12) über irgendein Paar der Mehrzahl von Paaren von Zahnrädern (GP1-GP6, GRT);

Steuermittel (30), um wenigstens zwei der Mehrzahl von mechanischen Kupplungseinrichtungen (S1, S2, S3, SR) zu ermöglichten, unabhängig zu arbeiten; und

Stufenauswahlmittel (17) zum Durchführen einer Schaltoperation, um eine Stufe aus einer Mehrzahl von Stufen auszuwählen, die eine Fahrstufe und eine Parkstufe enthalten,

wobei das Getriebe (10) so ausgeführt ist, dass dann, wenn das Stufenauswahlmittel (17) betätigt wird, um somit von irgendeiner anderen der Mehrzahl von Stufen In die Parkstufe zu schalten, das Steuermittel (30) die Mehrzahl von mechanischen Kupplungselnrichturigen (S1, S2, S3, SR) so steuert, dass das Eingangselement (11) und das Ausgangselement (12) über Paare der Mehrzahl von Paaren von Zahnrädern (GP1-GP6, GRT), die wenigstens zwei Übersetzungsverhältnissen entsprechen, miteinander verbunden werden, **dadurch gekennzeichnet, dass** die Zahnradpaare, die den wenigstens zwei Übersetzungsverhältnissen entsprechen, ein Zahnradpaar (GP1), das einem langsamsten Vorwärtsübersetzungsverhältnis entspricht, und ein Zahnradpaar (GP6), das einem schnellsten Übersetzungsverhältnis entspricht, enthalten.

2. Fahrzeuggetriebe (10) nach Anspruch 1, wobei dann, wenn das Stufenauswahlmittel (17) betätigt wird, um somit von Irgendeiner anderen der Mehrzahl von Stufen in die Parkstufe zu schalten, das Steuermittel (30) so ausgeführt ist, dass es die Mehrzahl von mechanischen Kupplungselnrichtungen (S1, S2, S3, SR) so steuert, das zuerst das Eingangselement (11) und das Ausgangselement (12) über eines der Mehrzahl von Paaren von Zahnrädern (GP1-GP6, GRT), das einem bestimmten Übersetzungsvehältnls entspricht, miteinander verbunden werden und anschließend das Eingangselement (11) und das Ausgangselement (12) über ein weiteres der Mehrzahl von Paaren von Zahnrädern (GP1-GP6, GRT), das einem weiteren Übersetzungsverhältnis entspricht, miteinander verbunden werden.

3. Fahrzeuggetriebe (10) nach Anspruch 1 oder 2, wobei dann, wenn das Stufenauswahlmittel (17) betätigt wird, um somit aus der Parkstufe in irgendeine andere der Mehrzahl von Stufen zu schalten, das Steuermittel (30) so ausgeführt ist, dass es die Verbindung über die Paare von Zahnrädern (GP1-GP6, GRT), die den wenigstens zwei Übersetzungsverhältnissen entsprechen, sequentiell löst.

4. Fahrzeuggetriebe nach Anspruch 1, 2 oder 3, wobei eines der Paare von Zahnrädern, das dem einen der wenigstens zwei Übersetzungsverhältnisse entspricht (GP1-GP6, GRT), ein Paar von Zahnrädern (GP1-GP6, GRT) ist, das einem Übersetzungsverhältnis entspricht, das In der Phase an das Eingangselement (11) oder das Ausgangselement (12), die zu verbinden sind, angepasst ist.

## Revendications

1. Transmission pour automobile (10) pour changer la vitesse d'une force d'entraînement d'un système de puissance (1) par palier pour la transmission à des roues motrices (W), comprenant :

un élément d'entrée (11) raccordé audit système de puissance (1) ;
un élément de sortie (12) raccordé auxdites roues motrices (W) ;
une pluralité de paires de roues dentées (GP1 à GP6, GRT) ayant des rapports d'engrenage différents qui sont prévues en parallèle entre ledit élément d'entrée (11) et ledit élément de sortie (12) ;
une pluralité de mécanismes d'embrayage mécanique (S1, S2, S3, SR) pour raccorder ledit élément d'entrée (11) avec ledit élément de sortie (12) par l'intermédiaire d'une paire quelconque de ladite pluralité de paires de roues dentées (GP1 à GP6, GRT) ;
des moyens de commande (30) pour permettre au moins à deux de ladite pluralité de mécanismes d'embrayage mécanique (S1, S2, S3, SR) de fonctionner indépendamment ; et
des moyens de sélection de plage (17) pour réaliser une opération de changement de vitesse afin de sélectionner une plage à partir d'une pluralité de plages comprenant une plage d'entraînement et une plage de stationnement,

dans laquelle ladite transmission (10) est agencée de sorte que lorsque lesdits moyens de sélection de plage (17) sont actionnés afin de passer dans ladite plage de stationnement à partir de n'importe quelle autre plage de ladite pluralité de plages, lesdits moyens de commande (30) commandent ladite pluralité de mécanismes d'embrayage mécanique (S1, S2, S3, SR) de sorte que ledit élément d'entrée (11) et ledit élément de sortie (12) sont raccordés entre eux par l'intermédiaire de paires de ladite pluralité de paires de roues dentées (GP1 à GP6, GRT) qui correspondent à au moins deux rapports d'engrenage, **caractérisée en ce que** lesdites paires de roues dentées correspondant auxdits au moins deux rapports d'engrenage comprennent une paire de roues dentées (GP1) correspondant à un rapport d'engrenage en marche avant le plus lent et une paire de roues dentées (GP6) correspondant à un rapport d'engrenage le plus rapide.

2. Transmission pour automobile (10) selon la revendication 1, dans laquelle lorsque lesdits moyens de sélection de plage (17) sont actionnés pour passer dans ladite plage de stationnement à partir de n'importe quelle autre plage de ladite pluralité de plages, lesdits moyens de commande (30) sont agencés pour commander ladite pluralité de mécanismes d'embrayage mécanique (S1, S2, S3, SR) de sorte que dans un premier temps ledit élément d'entrée (11) et ledit élément de sortie (12) sont raccordés entre eux par l'intermédiaire de l'une de ladite pluralité de paires de roues dentées (GP1 à GP6, GRT) qui correspond à un certain rapport d'engrenage et ensuite ledit élément d'entrée (11) et ledit élément de sortie (12) sont raccordés entre eux par l'intermédiaire d'une autre paire de ladite pluralité de paires de roues dentées (GP1 à GP6, GRT) qui correspond à un autre rapport d'engrenage.

3. Transmission pour automobile (10) selon la revendication 1 ou 2, dans laquelle lorsque lesdits moyens de sélection de plage (17) sont actionnés pour passer de ladite plage de stationnement à n'importe quelle autre plage de ladite pluralité de plages, lesdits moyens de commande (30) sont agencés pour débloquer de manière séquentielle le raccordement par lesdites paires de roues dentées (GP1 à GP6, GRT) qui correspondent auxdits au moins deux rapports d'engrenage.

4. Transmission pour automobile selon la revendication 1, 2 ou 3, dans laquelle l'une desdites paires de roues dentées qui correspond à l'un desdits au moins deux rapports d'engrenage (GP1 à GP6, GRT) est une paire de roues dentées (GP1 à GP6, GRT) qui correspond à un rapport d'engrenage qui est adapté en phase avec ledit élément d'entrée (11) ou ledit élément de sortie (12) à raccorder.

# FIG. 1

FIG. 2

EP 1 348 591 B1

## FIG. 3

| | FIRST SPEED | SECOND SPEED | THIRD SPEED | FOURTH SPEED | FIFTH SPEED | SIXTH SPEED | R | P |
|---|---|---|---|---|---|---|---|---|
| FIRST MOTOR | 1 | 2 | N | N | N | N | N | 1 |
| SECOND MOTOR | N | N | 1 | N | 2 | N | N | N |
| THIRD MOTOR | N | N | N | 1 | N | 2 | N | 2 |
| FOURTH MOTOR | N | N | N | N | N | N | S | N |

EP 1 348 591 B1

# FIG. 4

## FIG. 5

```
                    ┌─────────────────────┐
                    │  FROM D, N OR R TO P │
                    └─────────────────────┘
                               │
                               ▼
          ┌──────────────────────────────────────┐
   S11 ───│        OUTPUT CLUTCH                  │
          │     DISENGAGEMENT SIGNAL              │
          └──────────────────────────────────────┘
                               │
                               ▼
   S12 ──            CLUTCH
             IS IN DISENGAGED CONDITION  ────── NO
                        ?
                        │
                       YES
                        │
                        ▼
   S13 ──          VEHICLE SPEED ≤ V1?  ────── NO
                        │
                       YES
                        │
                        ▼
          ┌──────────────────────────────────────┐
   S14 ───│        OUTPUT SIXTH GEAR              │
          │       CONNECTION SIGNAL               │
          └──────────────────────────────────────┘
                               │
                               ▼
   S15 ──            SIXTH
             GEAR IS IN CONNECTION  ────── NO
                        ?
                        │
                       YES
                        │
                        ▼
          ┌──────────────────────────────────────┐
   S16 ───│        OUTPUT FIRST GEAR             │
          │       CONNECTION SIGNAL               │
          └──────────────────────────────────────┘
                               │
                               ▼
   S17 ──            FIRST
             GEAR IS IN CONNECTION  ────── NO
                        ?
                        │
                       YES
                        │
                        ▼
                    ┌────────┐
                    │  END   │
                    └────────┘
```

## FIG. 6

```
                    ┌─────────────────────┐
                    │  FROM D, N OR R TO P │
                    └─────────────────────┘
                                │
                                ▼
S11 ──────  ┌─────────────────────────────┐
            │     OUTPUT CLUTCH            │
            │  DISENGAGEMENT SIGNAL        │
            └─────────────────────────────┘
                                │
                                ▼
S12 ───             CLUTCH                         NO
            IS IN DISENGAGED CONDITION ──────────────┐
                        ?                             │
                                │ YES                 │
                                ▼                     │
S13 ───        VEHICLE SPEED ≤ V1?        NO          │
                                ──────────────┐       │
                                │ YES         │       │
                                ▼             │       │
S14 ──────  ┌─────────────────────────────┐  │       │
            │     OUTPUT SIXTH GEAR        │  │       │
            │     CONNECTION SIGNAL        │  │       │
            └─────────────────────────────┘  │       │
                                │             │       │
                                ▼             │       │
S15 ───             SIXTH                     │       │
            GEAR IS IN CONNECTION    NO       │       │
                        ? ─────────────────────       │
                                │ YES                 │
                                ▼                     │
S16 ──────  ┌─────────────────────────────┐           │
            │     OUTPUT FIRST GEAR        │           │
            │     CONNECTION SIGNAL        │           │
            └─────────────────────────────┘           │
                                │                      │
                                ▼                      │
S17 ───             FIRST                    NO         │
            GEAR IS IN CONNECTION ──────────────┐      │
                        ?                        │     │
                                │ YES            ▼     │
                                │        ┌──────────────────┐
                                │        │  PHASE MATCHING  │── S18
                                │        │     CONTROL      │
                                │        └──────────────────┘
                                ▼
                          ┌──────────┐
                          │   END    │
                          └──────────┘
```

## FIG. 7

S18 — PHASE MATCHING CONTROL

S18-1 — CANCEL FIRST GEAR CONNECTION SIGNAL

S18-2 — OUTPUT SECOND GEAR CONNECTION SIGNAL

S18-3 — SECOND GEAR IS IN CONNECTION? — NO

YES

S18-4 — CANCEL SECOND GEAR CONNECTION SIGNAL

S18-5 — OUTPUT THIRD GEAR CONNECTION SIGNAL

S18-6 — THIRD GEAR IS IN CONNECTION ? — NO

YES

S18-7 — CANCEL THIRD GEAR CONNECTION SIGNAL

S18-8 — OUTPUT FIFTH GEAR CONNECTION SIGNAL

S18-9 — FIFTH IS GEAR IS IN CONNECTION ? — NO

YES

RETURN

# FIG. 8

```
                    ( FROM P TO D (R) )
                            │
                            ▼
S21 ──┌──────────────────────────────────┐
      │         OUTPUT CLUTCH            │
      │      DISENGAGEMENT SIGNAL        │
      └──────────────────────────────────┘
                            │
                            ▼
S22              ╱────────────────────╲
              ╱        CLUTCH           ╲      NO
            ⟨   IS IN DISENGAGED CONDITION  ⟩────►
              ╲          ?               ╱
                ╲────────────────────╱
                         │ YES
                         ▼
S23 ──┌──────────────────────────────────┐
      │       OUTPUT FIRST GEAR          │
      │   CONNECTION RELEASING SIGNAL    │
      └──────────────────────────────────┘
                            │
                            ▼
S24              ╱────────────────────╲
              ╱       CONNECTION        ╲      NO
            ⟨  OF FIRST GEAR HAS BEEN RELEASED ⟩────►
              ╲          ?               ╱
                ╲────────────────────╱
                         │ YES
                         ▼
S25 ──┌──────────────────────────────────┐
      │       OUTPUT SIXTH GEAR          │
      │   CONNECTION RELEASING SIGNAL    │
      └──────────────────────────────────┘
                            │
                            ▼
S26              ╱────────────────────╲
              ╱       CONNECTION        ╲      NO
            ⟨  OF SIXTH GEAR HAS BEEN RELEASED ⟩────►
              ╲          ?               ╱
                ╲────────────────────╱
                         │ YES
                         ▼
S27 ──┌──────────────────────────────────┐
      │      OUTPUT FIRST (R) GEAR       │
      │       CONNECTION SIGNAL          │
      └──────────────────────────────────┘
                            │
                            ▼
S28              ╱────────────────────╲
              ╱          FIRST          ╲      NO
            ⟨    (R) GEAR IS IN CONNECTION  ⟩────►
              ╲          ?               ╱
                ╲────────────────────╱
                         │ YES
                         ▼
                      ( END )
```

24

# FIG. 9

```
        ( SWITCH OFF IGNITION )
                  │
                  ▼ ◄──────────────────────┐
S31 ─┤ OUTPUT ENGINE HALT SIGNAL │         │
                  │                         │
                  ▼                         │
S32                                    NO   │
      < ENGINE HAS BEEN HALTED? > ─────────┘
                  │
                 YES
                  │
                  ▼ ◄──────────────────────┐
S33 ─┤ OUTPUT CLUTCH ENGAGEMENT SIGNAL │   │
                  │                         │
                  ▼                         │
S34        CLUTCH IS                        │
      < IN ENGAGED CONDITION > ────── NO ──┘
                  ?
                 YES
                  │
                  ▼
              ( END )
```

# FIG. 10

```
                   ( SWITCH ON IGNITION )
                             │ ◄──────────────────────┐
                             ▼                         │
                   ┌─────────────────────┐             │
        S41 ────   │   OUTPUT CLUTCH      │             │
                   │ DISENGAGEMENT SIGNAL │             │
                   └─────────────────────┘             │
                             │                         │
                             ▼                         │
        S42                                            │
              ╱─────────────────────────────────╲  NO  │
             ◄          CLUTCH                    ╲─────┘
              ╲  IS IN DISENGAGED CONDITION      ╱
               ╲            ?                    ╱
                ╲─────────────────────────────╱
                             │ YES
                             ▼
        S43      ╱───────────────────╲   NO
                ◄      N OR P?         ╲──────────┐
                 ╲───────────────────╱           │
                             │ YES               │
                             ▼ ◄─────────────┐   │
                   ┌─────────────────────┐   │   │
        S44 ────   │ OUTPUT STARTER MOTOR │   │   │
                   │   STARTING SIGNAL    │   │   │
                   └─────────────────────┘   │   │
                             │               │   │
                             ▼               │   │
        S45                                  │   │
              ╱─────────────────────────────╲│   │
             ◄    ENGINE HAS BEEN STARTED?    ╲NO─┘
              ╲─────────────────────────────╱│
                             │ YES           │
                             ▼ ◄─────────────┘
                       (  END  )
```

## FIG. 11

**FIG. 12**

ENGINE

ECU

## FIG. 13

| | FIRST SPEED | SECOND SPEED | THIRD SPEED | FOURTH SPEED | FIFTH SPEED | SIXTH SPEED | R | P |
|---|---|---|---|---|---|---|---|---|
| FIRST MOTOR | 1 | 2 | N | N | N | N | N | 1 |
| SECOND MOTOR | N | N | 1 | N | 2 | N | N | N |
| THIRD MOTOR | N | N | N | 1 | N | 2 | N | N |
| FOURTH MOTOR | N | N | N | N | N | N | S | S |

EP 1 348 591 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001146966 A
- JP 2000264178 A
- JP 2000074214 A
- EP 928725 A